# EUROPEAN PATENT SPECIFICATION

(11) **EP 4 571 567 B1**
(45) Date of publication and mention of the grant of the patent: **13.05.2026**
(21) Application number: 23215468.2
(22) Date of filing: 11.12.2023
(51) Int. Cl.: G10L 15/22, G10L 15/18, G06F 40/279, G06F 40/20

(54) **METHOD, COMPUTER PROGRAM, APPARATUSES, AND SPEECH PROCESSING SYSTEM FOR CORRECTING A VOICE COMMAND**
VERFAHREN, COMPUTERPROGRAMM, VORRICHTUNGEN UND SPRACHVERARBEITUNGSSYSTEM ZUR KORREKTUR EINES SPRACHBEFEHLS
PROCÉDÉ, PROGRAMME INFORMATIQUE, APPAREILS ET SYSTÈME DE TRAITEMENT DE LA PAROLE POUR CORRIGER UNE COMMANDE VOCALE

(43) Date of publication of application: 18.06.2025
(73) Proprietor: Deutsche Telekom AG, 53113 Bonn (DE)
(72) Inventor: MINOW, Jascha, 64625 Bensheim (DE); JAHN, Carl, 65191 Wiesbaden (DE); EL MALLOUKI, Said, 56329 St. Goar (DE)
(74) Representative: 2SPL Patentanwälte PartG mbB

(56) References cited:
- US-A1- 2023 110 205
- US-B1- 11 626 106

## Description

### Field

Examples relate to a method, a computer program, an apparatus and a speech processing system for correcting a voice command, more particularly, but not exclusively, for enabling efficient error processing for correcting a voice command in speech recognition based on confidence information.

### Background

Speech recognition, also known as automatic speech recognition (ASR), voice recognition, or speech-to-text, is a capability that enables a computer or electronic device to interpret and respond to human speech. This technology uses algorithms to translate spoken language into text, making it a crucial component for applications such as voice-enabled assistants, dictation software, and automated customer service systems. The process may involve capturing sound through a microphone, processing the audio to filter out noise, and then analyzing the speech signal to determine the sequence of words that were spoken based on the pattern of sounds.

Speech recognition systems require the integration of various linguistic components to accurately comprehend spoken language. These include phonetics and phonology to understand the sounds, syntax for grasping grammatical structures, semantics to interpret meaning, and often pragmatics to comprehend the speaker's intent in context. Today, most cutting-edge speech recognition systems employ machine learning techniques, particularly deep learning neural networks, which significantly enhance their ability to learn from a large dataset of spoken language examples. These neural networks model high-level abstractions in data by using multiple processing layers that are trained using vast amounts of speech data.

Advancements in speech recognition have had a significant impact on various industries, enhancing accessibility for users with disabilities, improving efficiency in healthcare through medical transcription, and enabling safer driving with voice-controlled navigation systems. Moreover, as the technology continues to evolve, newer applications are being devised, including real-time language translation and voice-activated home automation. However, as much progress as there has been, the field still faces challenges with accurately recognizing speech in noisy environments, differentiating between voices, and handling accents and dialects. Despite these hurdles, the ongoing research and development in this field promise continued improvements in both the accuracy and versatility of speech recognition technology.

Speech recognition and speech processing and their quality, in terms of the accuracy of the calculation of the results, is largely based on the available training data and the algorithms used to process the commands. When training the various voice processing components, it is important to cover a very wide range of possible input parameters, such as issuing a voice command when the television is switched on or setting the timer while the extractor hood is running at the highest level.

Systems that process voice commands very often struggle with the problem that the actual audio for the voice command contains a wide variety of background noises. As a result, the background noises will override the user's actual command. For example, in a kitchen scenario the command "Set the timer to 5 minutes" is drowned out by the loud noise of the extractor hood. There are currently some methods that attempt to identify background noises for the audio and extract them from the audio in order to use the user's voice and thus the voice command for processing. However, these methods have limitations in detecting background noise as it strongly depends on the use case, the environment and the context.

Document US 2023/0110205 A1 describes techniques for handling errors during processing of natural language inputs. A system may process a natural language input to generate an ASR (Automatic Speech Recognition) hypothesis or NLU (Natural Language Understanding) hypothesis. The system may use more than one data searching technique (e.g., deep neural network searching, convolutional neural network searching, etc.) to generate an alternate ASR hypothesis or NLU hypothesis, depending on the type of hypothesis input for alternate hypothesis processing.

Document US 11,626,106 B1 discloses a system for determining which component of a speech processing system is the cause of an undesired response to a user input. The system processes ASR data and NLU data to determine the component likely to cause the undesired response. Based on which component is the cause of the undesired response, the system performs an appropriate conversation recovery technique to confirm the speech processing results with the user.

### Summary

It is a finding of the present disclosure that in most conventional error correction methods algorithms refer to the entire audio and the process is always run through, even if there is no background noise for the human ear that needs to be removed. It is also difficult for the algorithms to recognize whether the noise is a disadvantage for further processing or whether it is not a problem. Furthermore, systems may have great difficulty in recognizing and removing background noises if the user pauses for a long time when entering the voice command, as it is not possible to distinguish between foreground and background noises during the pause in speech. It is a further finding that error correction of such voice commands or audio content can be carried out during runtime. Examples may provide a method for correcting a voice command during the actual execution of speech recognition by recognizing at which point of the voice command there is an error caused by background noise and attempting to correct this point in order to then run the voice command through the execution chain again. It is a further finding that improvements in error correcting a voice command may be achieved by diverting the processing at runtime between a voice chain or voice processing component and an error correction component. The voice processing component processes the user's input to generate a response, which can also be referred to as non-error processing. The error correction component attempts to recognize possible errors at runtime and to correct these errors during the execution of the various processing steps.

A method according to claim 1 is provided for correcting a voice command during runtime. The method comprises obtaining an audio representation of the voice command and speech recognizing the voice command using the audio representation to obtain a text representation of the voice command and recognition confidence information indicating a confidence on whether the text representation matches the audio representation. The method further comprises, based on the recognition confidence information, error processing the audio representation and the text representation or non-error processing the audio representation. Examples therewith enable error correction at runtime by adapting the run-time processing to confidence information determined during speech recognition.

The non-error processing comprises performing domain classification configured to determine a domain for the speech/voice command and to provide domain confidence information indicating a confidence on whether the determined domain matches a domain of the audio representation. Speech recognition quality may benefit from domain determination. The domain and the use case that goes along with it may narrow the set of valid voice commands. E.g. once the domain or use case has been determined to be "weather" or "TV settings", a number of potential voice commands to choose from in that domain is significantly lower than an overall number of voice commands (for all domains/use cases). The method further comprises, based on the domain confidence information, error processing the audio representation and the text representation. Hence, examples may enable error correction for the domain in case a confidence for a determined domain falls below a threshold. Domain error correction may therewith be enabled at runtime.

The non-error processing further comprises, subsequent to the domain classification, performing entity identification configured to determine an entity the speech/voice command refers to and to provide entity confidence information indicating a confidence on whether the entity matches an entity of the voice command. The entity determination may further contribute to the voice recognition quality. The entity and the object reference that goes along with it may narrow the set of valid voice commands. E.g. once the entity has been determined to be a certain place, e.g. "Darmstadt" or "volume", a number of potential voice commands to choose from for that entity (potentially in combination with a domain) is significantly lower than an overall number of voice commands (for all entities). The method further comprises, based on the entity confidence information, error processing the audio representation and the text representation. Hence, examples may enable error correction for the entity in case a confidence for a determined entity falls below a threshold. Entity error correcting may therewith be enabled at runtime.

The non-error processing may comprise performing response generation configured to generate a response to the voice command and response confidence information based on one or more elements of the group of the domain, the entity, the text representation and the audio representation. Hence, at least in some examples a combination of the determined pieces of information may be used to decide on a response to the voice command, where the response may again be associated with a certain confidence. For example, although the test representation, the domain and the entity may have been determined with high confidences individually, their combination may result in a response with a lower confidence. The method may further comprise, based on the response confidence information, forwarding the audio representation and the text representation to the error correction entity. Likewise, response error processing may be carried out at runtime in examples. This may involve not only questioning whether the response was determined correctly in view of the given context but also questioning prior decisions (text representation, domain, entity), which may again contribute to enhancing the quality of the speech recognition.

At least in some examples, the error processing comprises identifying one or more errors in the audio representation and/or text representation and separating the one or more errors to obtain one or more separated errors. The separated error may help identifying the cause or nature of the error, for example, whether there is background noise, unclear speech, confused voices, etc. The separating of the one or more errors may comprise removing irrelevant content from the audio or text representation. In examples one or more errors may hence be isolated. Furthermore, the error processing may comprise classifying the one or more errors and/or the one or more separated errors to obtain one or more classified errors. The classification may enhance the error correction as the classification, e.g. whether there is a typo in the text representation because of a mispronounced word, may enable a more advanced error correction. For example, if the error is classified as an unknown word in the text representation, another speech model may be selected for an ASR based on user or context information, e.g. based on the region the user is in and a language model that is adapted to a dialect in that region.

The error processing may further comprise correcting the one or more errors, the one or more separated errors, and/or the one or more classified errors to obtain a corrected audio representation and/or a corrected text representation. For example, the correcting comprises correcting words in the text representation based on context or meta information related to the voice command. Examples may hence enable enhanced error processing and correction. The method may further comprise forwarding the corrected audio representation and/or the corrected text representation for re-processing to one of the previous processing steps, e.g. to the speech recognizing, the domain classification, the entity identification and/or the response generation.

In further examples, the method may comprise iterating through the error processing until a recognition confidence level is reached or latency limit for the processing has expired. Examples may enable an iteration loop in which a plurality of errors may be corrected. Moreover, the error processing may comprise attempting to identify one or more errors in the audio representation or the text representation, and, in case no error can be detected, generating an indication that no error could be identified.

A computer program according to claim 11 is provided having a program code for performing one of the methods described herein, when the computer program is executed on a computer, a processor, or a programmable hardware component.

An apparatus according to claim 12 is provided for correcting a voice command during runtime. The apparatus comprises one or more interfaces configured to communicate an audio representation of a voice command and a response representation to the voice command. The apparatus further comprises one or more processing devices configured to perform one of the methods as described herein. Yet another example is a speech processing system comprising the apparatus.

### Brief description of the Figures

Some examples of apparatuses, methods, and/or computer programs will be described in the following by way of example only, and with reference to the accompanying figures, in which
Fig. 1 shows a block diagram of an example of a method for correcting a voice command during runtime;
Fig. 2 shows a block diagram of an example of an apparatus for correcting a voice command during runtime; and
Fig. 3 shows a block diagram of another example of an apparatus for correcting a voice command.

### Detailed Description

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

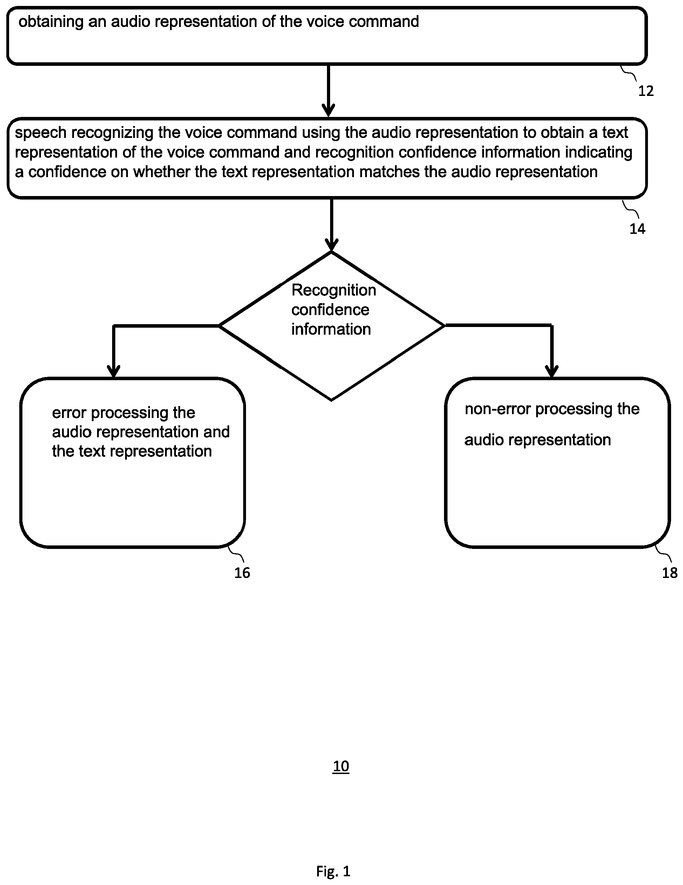

Fig. 1 shows a block diagram of an example of a method 10 for correcting a voice command during runtime. The method 10 comprises obtaining 12 an audio representation of the voice command and speech recognizing 14 the voice command using the audio representation to obtain a text representation of the voice command and recognition confidence information indicating a confidence on whether the text representation matches the audio representation. The method 10 further comprises, based on the recognition confidence information, error processing 16 the audio representation and the text representation or non-error processing 18 the audio representation (and/or the text representation).

In examples the algorithm may correct the voice command during runtime. The term runtime is to be interpreted as at the time between the start and end of the method. Runtime may generally refer to the period during which the method, its program or its application is running and executing its tasks. It is the duration from the start to the end of the execution of the method 10. In other words, runtime encompasses the time when a software program is actively processing and performing operations, as opposed to the time it spends in development or idle states. As the algorithm or method 10 is performed errors can be corrected by using error processing, which returns corrected versions of the signals or information to the regular processing chain, as will be detailed subsequently. Hence, the method 10 may, at runtime, divert or branch off to different error processing routines, which depend on the state of processing.

The error processing may introduce latency to the voice command processing at runtime. At least in some examples the algorithm may stop if the latency becomes too high or it is found that an error cannot be corrected. **In** examples, depending on the field of application different latencies may be tolerable, examples for such latencies are 250ms, 500ms, 750ms, 1000ms, 1250ms, 1500ms, etc. The tolerable latencies may also depend on a device that is operated, e.g. at a home computer the tolerable delay may be lower than at a mobile phone.

**In** examples the audio representation of the voice command may be digital audio data, i.e. a digital representation of the voice command in terms of audio samples at a certain sample rate, which may be represented using an audio codec. **In** terms of audio codecs, examples may use any lossy or lossless codec suitable for representing the voice command. **In** a specific example a microphone may be used to record an analog voice signal, which may be amplified and digitized using an analog-to-digital converter subsequently. The obtaining 12 of the audio representation may comprise sampling a voice command or just receiving or reading audio data from another device or entity.

The speech recognizing 14 may use any speech recognition algorithm to obtain the text representation and the confidence information. Speech recognition algorithms may be considered to be at the forefront of transforming the way humans interact with technology, enabling machines to convert spoken language into text. These algorithms have a complex task: to accurately and efficiently process human speech, which comes with a wide variability in accents, speeds, tones, and even distortions. They employ a variety of models and techniques, including acoustic modeling and language modeling. Acoustic models focus on capturing the relationship between audio signals and the phonetic units in speech, whereas language models predict the probability of certain word sequences, helping to discern between words that sound similar. Advances in machine learning, especially deep learning, have significantly improved the performance of speech recognition systems. Neural networks, such as convolutional neural networks (CNNs) and recurrent neural networks (RNNs), have been particularly effective in learning from vast amounts of spoken language data.

One challenge that speech recognition algorithms must overcome is the recognition of speech in noisy environments. Background noise, other voices, and technical interferences can mask the spoken words and lead to decreased accuracy. Algorithms have been developed to filter out these disruptions and isolate the primary speaker's voice. Techniques such as noise reduction, echo cancellation, and beamforming - using microphone arrays to focus on the sound from a specific direction - enhance the clarity of the input signal before it undergoes processing by the algorithm. Furthermore, employing models like Hidden Markov Models (HMMs), supplemented with deep neural networks, has granted speech recognition systems a greater degree of robustness in challenging acoustic environments.

The future of speech recognition algorithms lies in their integration and scalability across various platforms and languages. As they become more widespread, these algorithms need to accommodate an ever-growing diversity of users and applications. For example, voice-activated assistants, dictation software, and real-time translation services must continuously adapt and learn from user interactions. Multilingual speech recognition is another area of active development, as algorithms must understand and transcribe languages with significantly different structures, sounds, and idioms. Consequently, continual improvement in computational power, data storage, and algorithm optimization is vital to meet the increasing demand for fast and accurate speech recognition systems that can facilitate seamless communication and accessibility for users worldwide.

In examples an automatic speech recognition algorithm (ASR) is used to generate the text representation, e.g. based on a language model and a phoneme analysis of the audio representation. When detecting the text representation soft information may be used, e.g. in term of soft bits representing phonemes or words, which can then be assigned certain probabilities. Hence, such probabilities may be used as basis for the confidence of a certain text representation. In other words, at least in some examples the speech recognizing may evaluate different candidates of text representations, which all have a certain confidence in view of the audio representation and the language models used. For example, an ASR may provide the text representation with the highest confidence or probability for the given audio representation and language model(s).

As further illustrated in Fig. 1, depending on the recognition confidence information the method 10 may then continue, at runtime, with error processing 16 or non-error processing 18. For example, a confidence threshold may be used to decide on the further processing 16, 18.

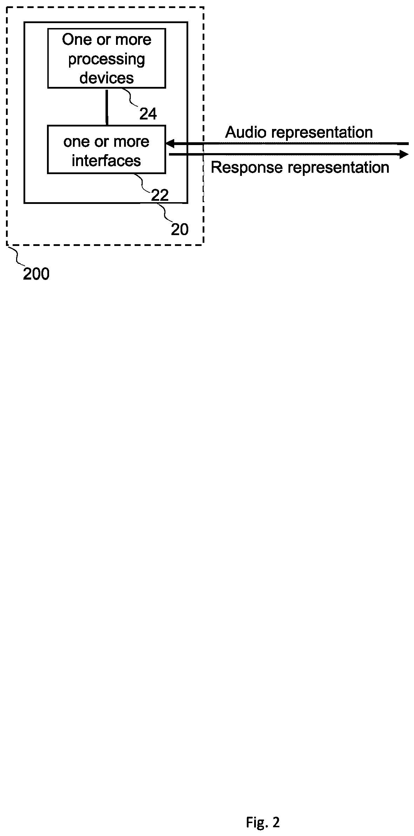

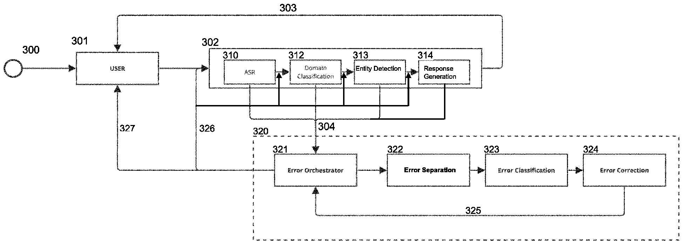

Fig. 2 shows a block diagram of an example of an apparatus 20 for correcting a voice command during runtime. The apparatus 20 for correcting the voice command during runtime comprises one or more interfaces 22, which are configured to communicate an audio representation of a voice command and a response representation to the voice command. The apparatus 20 further comprises one or more processing devices 24, which are coupled to the one or more interfaces 22 and which are configured to perform one of the methods 10 as described herein. Fig. 2 further illustrates a speech processing system 200, which comprises an example of the apparatus 20.

As illustrated in Fig. 2, the respective one or more processing devices 24 are coupled to the one or more interfaces 22. The one or more interfaces 22 may correspond to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit audio/text information. In examples an interface 22 may correspond to any means for obtaining, receiving, transmitting or providing analog or digital signals or information, e.g., any connector, contact, pin, register, input port, output port, conductor, lane, etc., which allows providing or obtaining a signal or information.

An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. In some examples the one or more interfaces 22 may be configured to receive or obtain the audio representation of the voice command from accordingly adapted sampling circuitry.

The one or more processing devices 24 may be implemented using one or more processing units, one or more circuitries, any means for processing, such as a processor, a computer or a programmable hardware component being operable with accordingly adapted software. **In** other words, the described function of the one or more processing devices 24 may as well be implemented in software, which is then executed on one or more programmable hardware components. Such hardware components may comprise a general-purpose processor, a Digital Signal Processor (DSP), a micro-controller, etc.

Fig. 3 shows a block diagram of another example of an apparatus, method or system for correcting a voice command. Fig. 3 shows starting point 300 at the very left. A user 301 then provides a voice command, which is, for example, recoded and sampled to obtain an audio representation of the voice command before it enters processing chain 302. The processing chain comprises multiple components in this example. At the beginning of the processing chain there is an Automatic Speech Recognition (ASR) 312 followed by domain classification 312, entity detection 313 and response generation 314. The response generation may provide a response to the user 301 as indicated by arrow 303. As has been outlined above, the ASR 310 is configured to provide a text representation of the audio representation and recognition confidence information.

Based on the recognition confidence information (and also based on confidence information provided by the other components of the processing chain 302) the processing chain 302 can be branched off to an error orchestrator 321, which is part of an error processing chain 320, and which is indicated by arrow 304 in Fig. 3. The error orchestrator 321 coordinates the error processing chain 320. As further shown in Fig 3 the error processing chain also comprises error separation 322, error classification 323, and error correction 324. The error correction 324 provides error correction information to the error orchestrator, which in turn can provide corrected information (be it text or audio) back to the non-error processing components, as indicated by the split arrows 326. The error orchestrator 321 may also provide information to the user 301, e.g. if further input is needed.

As indicated in Fig. 3 the procedure for correcting errors directly at runtime consists of two main components:
- The voice chain or voice processing component 302 processes the user's input to generate a response.
- In order to identify and correct an error, the error correction component 320 is available, which attempts to recognize possible errors at runtime and correct these errors during the execution of the various processing steps 310, 312, 313.

The aim of these components and the adapted procedure is to increase the recognition rate for a voice command, even if the extended processing of the error component results in some latency for processing.

At the beginning 300, the user 301 provides a voice command using a respective device (smartphone, smartspeaker, remote control). The voice command recorded in this way is sent to the voice processing system 302 via the network in the form of an audio file/audio stream. For example, the voice processing system 302 is executed on a server in a cloud or in a data center.

In the first step, the system 302 attempts to convert the existing audio into text with the help of ASR algorithms 310. The result of this conversion is a text that represents what the user may have spoken. A probability, also known as confidence, indicates how certain the system is that the text corresponds to the user's spoken audio. The more noise there is in the audio, the lower the confidence can be. If the confidence falls below a certain threshold, both the existing audio and the result from the ASR component 110 are sent to the error orchestrator 321. If the confidence has a higher value than the threshold, the converted audio text is forwarded to the domain classification 312. Examples of confidence thresholds that may be used to decide on the type of subsequent processing (error or non-error) may be 75%, 80%, 85%, 90%, 95%, 97%, 99%, etc.

The domain classification 312 is configured to carry out part of the non-error processing. It is configured determine a domain for the speech/voice command and to provide domain confidence information indicating a confidence on whether the domain matches a domain of the audio representation. Based on the domain confidence information, the domain classification can branch off to error processing the audio representation and the text representation as indicated by arrow 304. Again, one of the above examples for confidence thresholds may be used.

The domain classification 312 component uses the text representation to find out which use case is involved. Keywords play a major role in the evaluation. For the processing of" "Wie ist das Wetter in Darmstadt" ("What is the weather like in Darmstadt"), the word "Wetter" ("weather") is crucial for the weather use case to be requested by the user. It should be noted that an incorrect transcription in the ASR component 110, e.g. from the beginning of the sentence ("What is", "Wie ist"), does not pose a problem for further processing, as this information is not relevant.

If the use case was determined with a high confidence value, the entire text is forwarded to the entity recognition component 313 in order to extract the use case-specific information. For the example "What is the weather like in Darmstadt", only the word "Darmstadt" is relevant for the entity recognition 313. If this component also calculates a high confidence, which is above the threshold, the extracted information is forwarded to the response generation 314 component in order to generate a suitable response, e.g. "In Darmstadt today it's cloudy and 10°". This response generation 314 can also recognize an error if, for example, no weather information can be found for the supposedly extracted city, in our case Darmstadt.

Hence, as shown in Fig. 3 the implemented non-error processing 18 comprises performing entity identification 313 configured to determine an entity the speech/voice command refers to and to provide entity confidence information indicating a confidence on whether the entity matches an entity of the voice command. Based on the entity confidence information, the entity identification 313 can branch off to error processing the audio representation and the text representation as indicated by arrow 304. Again, one of the above examples for confidence thresholds may be used.

The non-error processing further comprises performing response generation 314 configured to generate a response to the voice command and response confidence information based on one or more elements of the group of the domain, the entity, the text representation and the audio representation. As further illustrated by arrow 314 the method further comprises, based on the response confidence information, forwarding the audio representation and the text representation to the error correction entity 320.

In summary, the processing components 310, 312, 313 and 314 forward the collected and extracted information to the error orchestrator 321 in order to automatically correct a possible error during runtime. It is important that the components for troubleshooting 320 are specialized in eliminating certain errors with the help of an error strategy and that errors can also be solved with several strategies that build up on each other.

When developing the processing components 302, the focus is on ensuring that these components are trained and configured with the correct data. At least in some examples the systems are not deliberately trained or configured with false or negative examples in order to reduce the rate of false positive detection and complexity.

The aim is to ensure that the troubleshooting components 320 are specialized in detecting and rectifying faults.

Depending on which component 310, 312, 313 and 314 has identified a possible error, the error orchestrator 321 attempts to find a strategy to rectify the error.

### ASR 310 Error:

If the transcription of the audio into text is not very accurate, the error orchestrator 321 forwards the voice command to a specialized error separator 322. The error separator 322 tries to extract the exact location of the error in the audio. The error separator 322 uses the word probability tree generated by the ASR 310 to determine the exact node that causes the result to have a low confidence. This part of the audio, which contains the possible error, is then extracted by the error separator 322. The error processing 320 hence comprises identifying one or more errors in the audio representation and/or text representation and separating the one or more errors to obtain one or more separated errors. The separating of the one or more errors may also comprise removing irrelevant content from the audio or text representation.

The error classification service 323 then analyzes the section of audio (separated error) and attempts to identify what the error might be. E.g. loud background noises (extractor hood, barking, vacuum cleaner), mumbling, disturbing noises (coughing, sneezing) or speaking too quickly. The method hence comprises classifying the one or more errors, the one or more separated errors, respectively, to obtain one or more classified errors.

The error correction 324 component then attempts to correct the error. The method hence comprises correcting the one or more errors, the one or more separated errors, and/or the one or more classified errors to obtain a corrected audio representation and/or a corrected text representation. For example, if you mumble or speak too quickly, the section of audio can be slowed down. Background noise can be extracted or foreground sound can be amplified. The correcting may comprise correcting words in the text representation based on context or meta information related to the voice command.

The corrected audio file is then transferred back to the error orchestrator 321 as indicated by arrow 325. From the error orchestrator 321 forwarding of the corrected audio representation and/or the corrected text representation for re-processing to one of the previous processing steps 10 312, 313 or 314 may take place as indicated by arrow 326.

Once the error has been successfully rectified, the voice command is forwarded back to the voice processing chain 302 for processing again. Hence, the method may further comprise iterating through the error processing, between the non-error processing 302 and the error processing 320, until a recognition confidence level is reached, e.g. 75%, 80%, 85%, 90%, 95%, 97%, 99%, etc. or latency limit for the processing has expired.

If no error is detected in the troubleshooting components 322, 323, 324 and therefore no troubleshooting strategy is found, an error message ("Please repeat your request") is returned to the user as indicated by arrow 327. Hence, the error processing 16, 320 may comprise attempting to identify one or more errors in the audio representation or the text representation, and, in case no error can be detected, an indication that no error could be identified is generated.

### Domain Classification 312 Error:

If it is not possible to extract the use case with the help of the domain classification service 312, the error orchestrator 321 forwards the error to the specialized error separator 322. In this case the error separator 322 first removes all filler words that are not relevant to the actual context. For the example "Wie ist das Wetter in Darmstadt" ("What is the weather like in Darmstadt"), the words "Wie", "ist", "das" and "in" are not relevant and are removed. The error classification service 323 then uses the reduced text to find out exactly which error is involved. These errors often consist of incorrect spellings of words that are not recognized by the domain classification service 322, e.g. "Wedder" instead of "Wetter" or "Schald" instead of "Schalte", which also occur in different accents of the German language, are common errors. The error correction service 324 can use the context information and metadata of the user (e.g. location or zip code) to correct this error, as the service has the knowledge that "Wetter" is often pronounced as "Wedder" in Hessen/Germany. Finally, as with ASR errors, the correction of the command is returned to the error orchestrator 321, which decides whether the voice command is processed again or an error message is issued.

### Entity recognition 313 error:

The procedure for entity detection 313 is similar to the domain classification error. However, the peculiarities of the respective domain or use case are addressed more specifically. The voice command "Schalte auf das 1." ("Switch to the 1.") cannot be accurately classified by entity detection. Based on the domain knowledge of the error correction component 324, it is clear that "1." corresponds to the first or ARD (Germany public TV station "Arbeitsgemein-schaft der öffentlich-rechtlichen Rundfunkanstalten der Bundesrepublik Deutschland") channel and thus the error can be corrected.

### Response generation 314 error:

A typical error during response generation is that a certain entity value (city name, sender/station name) cannot be found in external systems, although the spelling is correct and the previous components 310, 312 and 313 have extracted all the necessary information correctly. For example, for the voice command "Wie ist das Wetter in Frankfurt" ("What is the weather like in Frankfurt"), the response generation 314 does not indicate whether the city of Frankfurt/Main or Frankfurt/Oder is meant. The error correction 324 can access the user's location or history to find out whether voice commands with a similar location exist. If the user has previously asked "Wie warm ist es heute in Mainz" ("How warm is it today in Mainz"), it is likely that the user wants to use Frankfurt/Main and not Frankfurt/Oder as the location for the voice command and so this error can be corrected.

In summary, it should be emphasized that the examples are based on the finding that that the actual language processing components 302 are not configured and trained in such a way that the individual components have a particularly high robustness and are thus not susceptible to errors, but the robustness is deliberately increased by the error recovery component 320 with regard to the entire system.

This may have the advantage that the complexity of the data and configuration of the language processing components 302 can be reduced and the error correction components 320 are very specialized for a specific error case. In development, this significantly simplifies the process of bringing a new feature to market, as errors are deliberately allowed in the processing chain 302 in order to correct them with the help of the error correction component 320. This significantly reduces the testing and complexity of the processing chain 302, the recognition rate for voice commands is more accurate and execution is faster, as the components have to process less data and less complex algorithms. Examples may as well be used to correct distorted speech.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. A method (10) for correcting a voice command during runtime, the method (10) comprising
obtaining (12) an audio representation of the voice command;
speech recognizing (14) the voice command using the audio representation to obtain a text representation of the voice command and recognition confidence information indicating a confidence on whether the text representation matches the audio representation;
based on the recognition confidence information:
error processing (16; 320) the audio representation and the text representation; or
non-error processing (18; 302) the audio representation,
wherein the non-error processing (18; 302) comprises performing domain classification (312) configured to determine a domain for the voice command and to provide domain confidence information indicating a confidence on whether the domain matches a domain of the audio representation; the method (10) further comprising, based on the domain confidence information, error processing (16; 320) the audio representation and the text representation,
wherein the non-error processing (18; 302) comprises performing entity identification (313) subsequent to the domain classification (312), wherein the performing of the entity identification (313) is configured to determine an entity the voice command refers to and to provide entity confidence information indicating a confidence on whether the entity matches an entity of the voice command; the method (10) further comprising, based on the entity confidence information, error processing (16; 320) the audio representation and the text representation.

2. The method (10) of claim 1, wherein the non-error processing (18; 302) comprises performing response generation (314) subsequent to the entity identification (313), wherein the performing of the response generation (314) is configured to generate a response to the voice command and response confidence information based on one or more elements of the group of the domain, the entity, the text representation and the audio representation; the method (10) further comprising, based on the response confidence information, forwarding the audio representation and the text representation to the error processing (16).

3. The method (10) of one of the claims 1 or 2, wherein the error processing (16; 320) comprises identifying one or more errors in the audio representation and/or text representation, and separating (322) the one or more errors to obtain one or more separated errors.

4. The method (10) of claim 3, wherein the separating (322) of the one or more errors comprises removing irrelevant content from the audio or text representation.

5. The method (10) of one of the claims 3 or 4, further comprising classifying (323) the one or more errors and/or the one or more separated errors to obtain one or more classified errors.

6. The method (10) of one of the claims 3 to 5, further comprising correcting (324) the one or more errors, the one or more separated errors, and/or the one or more classified errors to obtain a corrected audio representation and/or a corrected text representation.

7. The method (10) of claim 6, wherein the correcting (324) comprises correcting words in the text representation based on context or meta information related to the voice command.

8. The method (10) of one of the claims 6 or 7, further comprising forwarding (326) the corrected audio representation and/or the corrected text representation for re-processing to one of the previous processing steps of one of the claims 1 to 4.

9. The method (10) of claim 8, further comprising iterating through the error processing (16; 320) until a recognition confidence level is reached or latency limit for the processing has expired.

10. The method (10) of one of the claims 1 or 2, wherein the error processing (16) comprises attempting to identify one or more errors in the audio representation or the text representation, and, in case no error can be detected, generating an indication (327) that no error could be identified.

11. A computer program having a program code for performing one of the methods (10) of one of the claims 1 to 10, when the computer program is executed on a computer, a processor, or a programmable hardware component.

12. An apparatus (20) for correcting a voice command during runtime, the apparatus (20) comprising
one or more interfaces (22) configured to communicate an audio representation of a voice command and a response representation to the voice command; and
one or more processing devices (24) configured to perform one of the methods (10) of claims 1 to 10.

13. A speech processing system (200) comprising the apparatus (20) of claim 12.

## Patentansprüche

1. Ein Verfahren (10) zum Korrigieren eines Sprachbefehls während der Laufzeit, das Verfahren (10) umfassend
Erhalten (12) einer Audiodarstellung des Sprachbefehls;
Spracherkennung (14) des Sprachbefehls unter Verwendung der Audiodarstellung, um eine Textdarstellung des Sprachbefehls und Erkennungskonfidenzinformationen zu erhalten, die eine Konfidenz dahingehend angeben, ob die Textdarstellung mit der Audiodarstellung übereinstimmt;
basierend auf den Erkennungskonfidenzinformationen:
Fehlerverarbeitung (16; 320) der Audiodarstellung und der Textdarstellung; oder
Nicht-Fehler-Verarbeitung (18; 302) der Audiodarstellung,
wobei die Nicht-Fehler-Verarbeitung (18; 302) ein Durchführen einer Domänenklassifikation (312) umfasst, die ausgebildet ist, um eine Domäne für den Sprachbefehl zu bestimmen und Domänenkonfidenzinformationen bereitzustellen, die eine Konfidenz dahingehend angeben, ob die Domäne mit einer Domäne der Audiodarstellung übereinstimmt; das Verfahren (10) ferner umfassend, basierend auf den Domänenkonfidenzinformationen, eine Fehlerverarbeitung (16; 320) der Audiodarstellung und der Textdarstellung,
wobei die Nicht-Fehler-Verarbeitung (18; 302) ein Durchführen einer Entitätsidentifikation (313) im Anschluss an die Domänenklassifikation (312) umfasst, wobei das Durchführen der Entitätsidentifikation (313) ausgebildet ist, um eine Entität zu bestimmen, auf die sich der Sprachbefehl bezieht, und um Entitätskonfidenzinformationen bereitzustellen, die eine Konfidenz dahingehend angeben, ob die Entität mit einer Entität des Sprachbefehls übereinstimmt; das Verfahren (10) ferner umfassend, basierend auf den Entitätskonfidenzinformationen, eine Fehler-verarbeitung (16; 320) der Audiodarstellung und der Textdarstellung.

2. Das Verfahren (10) gemäß Anspruch 1, wobei die Nicht-Fehler-Verarbeitung (18; 302) ein Durchführen einer Antworterzeugung (314) im Anschluss an die Entitätsidentifikation (313) umfasst, wobei das Durchführen der Antworterzeugung (314) ausgebildet ist, um eine Antwort auf den Sprachbefehl und Antwortkonfidenzinformationen basierend auf einem oder mehreren Elementen aus der Gruppe der Domäne, der Entität, der Textdarstellung und der Audiodarstellung zu erzeugen; das Verfahren (10) ferner umfassend, basierend auf den Antwortkonfidenzinformationen, ein Weiterleiten der Audiodarstellung und der Textdarstellung an die Fehlerverarbeitung (16).

3. Das Verfahren (10) gemäß einem der Ansprüche 1 oder 2, wobei die Fehlerverarbeitung (16; 320) ein Identifizieren eines oder mehrerer Fehler in der Audiodarstellung und/oder Textdarstellung und ein Trennen (322) des einen oder der mehreren Fehler, um einen oder mehrere getrennte Fehler zu erhalten, umfasst.

4. Das Verfahren (10) gemäß Anspruch 3, wobei das Trennen (322) des einen oder der mehreren Fehler ein Entfernen von irrelevantem Inhalt aus der Audio- oder Textdarstellung umfasst.

5. Das Verfahren (10) gemäß einem der Ansprüche 3 oder 4, ferner umfassend ein Klassifizieren (323) des einen oder der mehreren Fehler und/oder des einen oder der mehreren getrennten Fehler, um einen oder mehrere klassifizierte Fehler zu erhalten.

6. Das Verfahren (10) gemäß einem der Ansprüche 3 bis 5, ferner umfassend ein Korrigieren (324) des einen oder der mehreren Fehler, des einen oder der mehreren getrennten Fehler und/oder des einen oder der mehreren klassifizierten Fehler, um eine korrigierte Audiodarstellung und/oder eine korrigierte Textdarstellung zu erhalten.

7. Das Verfahren (10) gemäß Anspruch 6, wobei das Korrigieren (324) ein Korrigieren von Wörtern in der Textdarstellung basierend auf Kontext- oder Metainformationen in Bezug auf den Sprachbefehl umfasst.

8. Das Verfahren (10) gemäß einem der Ansprüche 6 oder 7, ferner umfassend ein Weiterleiten (326) der korrigierten Audiodarstellung und/oder der korrigierten Textdarstellung zur erneuten Verarbeitung an einen der vorhergehenden Verarbeitungsschritte gemäß einem der Ansprüche 1 bis 4.

9. Das Verfahren (10) gemäß Anspruch 8, ferner umfassend ein Iterieren durch die Fehlerverarbeitung (16; 320), bis ein Erkennungskonfidenzniveau erreicht ist oder ein Latenzlimit für die Verarbeitung abgelaufen ist.

10. Das Verfahren (10) gemäß einem der Ansprüche 1 oder 2, wobei die Fehlerverarbeitung (16) ein Versuchen, einen oder mehrere Fehler in der Audiodarstellung oder der Textdarstellung zu identifizieren, und, falls kein Fehler detektiert werden kann, ein Erzeugen einer Anzeige (327), dass kein Fehler identifiziert werden konnte, umfasst.

11. Ein Computerprogramm mit einem Programmcode zum Durchführen eines der Verfahren (10) gemäß einem der Ansprüche 1 bis 10, wenn das Computerprogramm auf einem Computer, einem Prozessor oder einer programmierbaren Hardwarekomponente ausgeführt wird.

12. Eine Vorrichtung (20) zum Korrigieren eines Sprachbefehls während der Laufzeit, die Vorrichtung (20) umfassend
eine oder mehrere Schnittstellen (22), die ausgebildet sind, um eine Audiodarstellung eines Sprachbefehls und eine Antwortdarstellung auf den Sprachbefehl zu kommunizieren; und
eine oder mehrere Verarbeitungsvorrichtungen (24), die ausgebildet sind, um eines der Verfahren (10) gemäß den Ansprüchen 1 bis 10 durchzuführen.

13. Ein Sprachverarbeitungssystem (200), umfassend die Vorrichtung (20) gemäß Anspruch 12.

## Revendications

1. Procédé (10) de correction d'une commande vocale pendant le temps d'exécution, le procédé (10) comprenant
une obtention (12) d'une représentation audio de la commande vocale ;
une reconnaissance vocale (14) de la commande vocale en utilisant la représentation audio pour obtenir une représentation textuelle de la commande vocale et des informations de confiance de reconnaissance indiquant une confiance quant à savoir si la représentation textuelle correspond à la représentation audio ;
sur la base des informations de confiance de reconnaissance :
un traitement d'erreur (16 ; 320) de la représentation audio et de la représentation textuelle ; ou
un traitement de non-erreur (18 ; 302) de la représentation audio,
dans lequel le traitement de non-erreur (18 ; 302) comprend une exécution d'une classification de domaine (312) configurée pour déterminer un domaine pour la commande vocale et pour fournir des informations de confiance de domaine indiquant une confiance quant à savoir si le domaine correspond à un domaine de la représentation audio ; le procédé (10) comprenant en outre, sur la base des informations de confiance de domaine, un traitement d'erreur (16 ; 320) de la représentation audio et de la représentation textuelle,
dans lequel le traitement de non-erreur (18 ; 302) comprend une exécution d'une identification d'entité (313) à la suite de la classification de domaine (312), dans lequel l'exécution de l'identification d'entité (313) est configurée pour déterminer une entité à laquelle la commande vocale fait référence et pour fournir des informations de confiance d'entité indiquant une confiance quant à savoir si l'entité correspond à une entité de la commande vocale ; le procédé (10) comprenant en outre, sur la base des informations de confiance d'entité, un traitement d'erreur (16 ; 320) de la représentation audio et de la représentation textuelle.

2. Procédé (10) selon la revendication 1, dans lequel le traitement de non-erreur (18 ; 302) comprend une exécution d'une génération de réponse (314) à la suite de l'identification d'entité (313), dans lequel l'exécution de la génération de réponse (314) est configurée pour générer une réponse à la commande vocale et des informations de confiance de réponse sur la base d'un ou plusieurs éléments parmi le groupe du domaine, de l'entité, de la représentation textuelle et de la représentation audio ; le procédé (10) comprenant en outre, sur la base des informations de confiance de réponse, le fait de transmettre la représentation audio et la représentation textuelle au traitement d'erreur (16).

3. Procédé (10) selon l'une des revendications 1 ou 2, dans lequel le traitement d'erreur (16 ; 320) comprend le fait d'identifier une ou plusieurs erreurs dans la représentation audio et/ou la représentation textuelle, et de séparer (322) les une ou plusieurs erreurs pour obtenir une ou plusieurs erreurs séparées.

4. Procédé (10) selon la revendication 3, dans lequel la séparation (322) des une ou plusieurs erreurs comprend le fait d'éliminer un contenu non pertinent de la représentation audio ou textuelle.

5. Procédé (10) selon l'une des revendications 3 ou 4, comprenant en outre le fait de classifier (323) les une ou plusieurs erreurs et/ou les une ou plusieurs erreurs séparées pour obtenir une ou plusieurs erreurs classifiées.

6. Procédé (10) selon l'une des revendications 3 à 5, comprenant en outre le fait de corriger (324) les une ou plusieurs erreurs, les une ou plusieurs erreurs séparées, et/ou les une ou plusieurs erreurs classifiées pour obtenir une représentation audio corrigée et/ou une représentation textuelle corrigée.

7. Procédé (10) selon la revendication 6, dans lequel la correction (324) comprend le fait de corriger des mots dans la représentation textuelle sur la base d'un contexte ou de méta-informations relatives à la commande vocale.

8. Procédé (10) selon l'une des revendications 6 ou 7, comprenant en outre le fait de transmettre (326) la représentation audio corrigée et/ou la représentation textuelle corrigée pour un retraitement à l'une des étapes de traitement précédentes de l'une des revendications 1 à 4.

9. Procédé (10) selon la revendication 8, comprenant en outre le fait d'itérer à travers le traitement d'erreur (16 ; 320) jusqu'à ce qu'un niveau de confiance de reconnaissance soit atteint ou qu'une limite de latence pour le traitement ait expiré.

10. Procédé (10) selon l'une des revendications 1 ou 2, dans lequel le traitement d'erreur (16) comprend le fait de tenter d'identifier une ou plusieurs erreurs dans la représentation audio ou la représentation textuelle, et, dans le cas où aucune erreur ne peut être détectée, le fait de générer une indication (327) qu'aucune erreur ne pouvait être identifiée.

11. Programme informatique ayant un code de programme pour exécuter l'un des procédés (10) selon l'une des revendications 1 à 10, lorsque le programme informatique est exécuté sur un ordinateur, un processeur ou un composant matériel programmable.

12. Appareil (20) de correction d'une commande vocale pendant le temps d'exécution, l'appareil (20) comprenant
une ou plusieurs interfaces (22) configurées pour communiquer une représentation audio d'une commande vocale et une représentation de réponse à la commande vocale ; et
un ou plusieurs dispositifs de traitement (24) configurés pour exécuter l'un des procédés (10) selon les revendications 1 à 10.

13. Système de traitement vocal (200) comprenant l'appareil (20) selon la revendication 12.
